# EUROPEAN PATENT SPECIFICATION

(11) **EP 2 011 621 B1**
(45) Date of publication and mention of the grant of the patent: **04.07.2012**
(21) Application number: 07111965.5
(22) Date of filing: 06.07.2007
(51) Int. Cl.: B29C 45/27

(54) **Insulating spacer for an injection mould**
Isolierstück für eine Spritzgussform
Structure d'espacement isolante pour moule d'injection

(43) Date of publication of application: 07.01.2009
(73) Proprietor: Heatlock Co. Ltd., Central HongKong (HK)
(72) Inventor: Helldin, Calle, Guangzhou, Guangdong (CN)
(74) Representative: Sander Jakobsson, Sofia Ellinor

(56) References cited:
- DE-A1- 10 347 406
- LKM HEATLOCK CO LTD: "CERAMIC"[Online] April 2003 (2003-04), pages 3.1.1-3.1.4, XP002459778 Retrieved from the Internet: URL:http://web.archive.org/web/20061031025 512/www.heatlock.com/pdf/en_cat/3_01_ceram ics.pdf> [retrieved on 2007-11-23]
- I-MOLD MOLDING INNOVATIONS: "HEISSKANAL-SYSTEME"[Online] October 2006 (2006-10), pages 1-35, XP002459779 Retrieved from the Internet: URL:http://www.heatlock.com/pdf/de_cat/LKM HEATLOCK-DE.PDF> [retrieved on 2007-10-23]

## Description

### Technical field

The present invention relates to an insulating spacer arranged between at least two parts of an injection mould, which at least two injection mould parts will have different temperatures during operation.

### Technical background

In an injection mould a hot runner injection system is used to provide thermoplastic material to a present mould. When the thermoplastic material flows through the hot runner injection system heat is transferred to surrounding parts that are in contact with the hot runner injection system. To achieve good result it is important to maintain the temperature of the thermoplastic at a certain level. It is therefore desired to reduce the heat transfer from the thermoplastic to surrounding parts of the hot runner injection system to easier control the temperature and reduce energy losses. It is known to use a thermally insulating element to form a thermal barrier between hot and cold parts of the injection mould in order to reduce the heat dissipation from the thermoplastic material. Improvements have been made by using thermally insulating elements made of a ceramic material, due to the low heat conductivity characteristics of ceramic materials.

EP 0 920 969 B1 discloses a means for injection moulding having an insulating ring made from a ceramic material, thermally insulating a part of a hot runner injection system from a mould. An issue with this arrangement is that the requirements regarding accuracy of the insulating ring are rather high in order to position the hot runner injection system correctly and/or to avoid leakage. Thus, the ceramic rings need to be manufactured with high precision, which may be considered complex and costly.

DE 10347406 A1 disloses an insulating spacer comprising a metal body and insulating ceramic elements embedded into the body, in accordance with the preamble of claim 1.

### Summary of the invention

It is an object of the present invention to provide an improved solution that alleviates the mentioned drawbacks with present insulating spacers. Furthermore, it is an object to provide a more cost-efficient insulating spacer for a mould injection system.

It is desirable to achieve a robust and reliable solution in accordance with the objects of the present invention and keep high standard as regards quality and functionality by providing an alternative insulating element for a mould injection system.

This and other objects that will be apparent from the following summary and description are achieved by an insulating element according to the appended claims.

According to an aspect of the present invention, there is provided an insulating spacer arranged between at least two parts of an injection mould, which at least two injection mould parts will have different temperatures during operation. The insulating spacer is formed by an insulating element and a dimension adaption element comprising a material different to said insulating element, wherein the insulating element and the dimension adaption element being arranged such that the at least two injection mould parts having different temperatures during operation are thermally insulated from each other, wherein said insulating element and said dimension adaption element are complementary engaged.

Preferably, the dimension adaption element is made of a material, such as steel, that is easy to machine. Thus, a dimension of the insulating spacer can easily be adapted to fit a present mould. Such a dimension may for instance be the thickness of the insulating spacer in a longitudinal direction. The dimension adaption of the insulating spacer may be carried out by machining the dimension adaption element. Preferably, the dimension adaption is obtained by means of machining by detachment of cutting using a cutting tool.
Since the dimension adaption element easily can be machined, the accuracy and/or the tolerances as regards the dimensions of the insulating element is not longer crucial to achieve a leak free injection mould. The required accuracy of the insulating element can thus be reduced keeping high accuracy as regards the dimensions of the insulating spacer, since the dimension adaption element enables dimension adaption of the insulating spacer. Thus, an insulating element can be manufactured in a cost-effective way. Since the insulating element and the dimension adaption element are engaged to each other, the dimension adaption is carried out in this engaged condition. Thus, dimension adaption of the insulating spacer in an engaged condition is enabled. Since the insulating element and the dimension adaption element are complementary engaged they form the insulating spacer as a single piece and consequently the insulting spacer can be handled and/or dimension adapted as a single piece.

By "complementary engaged" is meant that the insulating element and the dimension adaption element have contact surfaces fitting each other and that the insulating element and the dimension adaption element are engaged with each other, e.g. by means of indentations, press fit or an adhesive arranged between the contact surfaces.

Preferably, the dimension adaption element has a receiving portion arranged at the circumference of the insulating element in order to support the insulating element. The receiving portion protects the insulating element from being damaged due to mechanical impact. In case the insulating element is mechanically damaged, due to for instance a crack, the receiving portion will keep the insulating element together. Hence, a durable insulating spacer is provided. The receiving portion is thus adapted to mechanically stabilize and/or support the insulating element in a radial direction.

More preferably, the receiving portion extends partly along the insulating element in the length extension of the insulating element, i.e. the dimension adaption element is during operation of the injection mould not in contact with a part of the injection mould and thus the insulating element provides efficient heat insulation between the actual parts insulated by the insulating spacer.

Preferably, the insulating element is lockingly engageable to said dimension adaption element, thereby it may be possible to mechanically fasten the insulating element and the dimension adaption element to each other at least in a radial direction. Hence, easy handling of the insulating element as a single component may be provided.

More preferably, the insulating element has an engaging portion and the dimension adaption element has a locking portion, which is complementary arranged to said engaging portion. Thus, a robust mechanical engagement of the insulating element to the dimension adaption element is enabled.

Preferably, at least a portion of the dimension adaption element is deformable to lockingly engage the engaging portion of said first insulating element. Thus, a robust engagement of the insulating element to the dimension adaption element is enabled.

Preferably, the insulating element is formed by a material with low heat conductivity such as ceramic material, in order to achieve efficient heat insulation between the parts that are insulated by the insulating spacer. Alternatively, the insulating element may be formed by titanium.

Preferably, the dimension adaption element is formed by a metallic material, or a metallic alloy, having high strength and which is possible to machine, in order to enable easy machining of the dimension adaption element.

More preferably, the dimension adaption element is formed by a high-alloy steel, for instance stainless steel, having high strength.

Machining of for instance steel is less expensive than machining of ceramic material. By using a dimension adaption element formed from a material that is easy to machine, an insulating element that can be manufactured in a cost-efficient manner is provided. The insulating element is formed from a material with low heat conductivity, such as a ceramic material. Such materials are difficult to machine resulting in high costs to reach a sufficient level of accuracy. Manufacturing of ceramic parts with high precision is considered costly. Since the dimensions can be adapted by machining the dimension adaption element, lower precision regarding the ceramic part is required compared to known insulating spacers and thus a more cost-efficient insulating element is provided.

### Brief Description of the drawings

The present invention will now be described in more detail with the reference to the accompanying schematic drawings, which show a preferred embodiment in which:
Fig 1 shows a perspective view of parts of an injection mould.
Fig 2 shows a cross-sectional view of a part of the injection mould in fig 1.
Fig 3 shows a part of a hot runner system for an injection mould provided with an insulating spacer according to an embodiment of the present invention.
Fig 4 is a sectional view that shows the insulating spacer shown in fig 3 in greater detail.
Fig 5 is a perspective view of the insulating spacer shown in fig 3.
Fig 6 shows a perspective view of an insulating spacer according to a second embodiment.
Fig 7 shows a perspective view of a insulating spacer according to a third embodiment.
Figs 8a-c shows an insulating spacer at different stages during an assembling process.

### Detailed description of a preferred embodiment

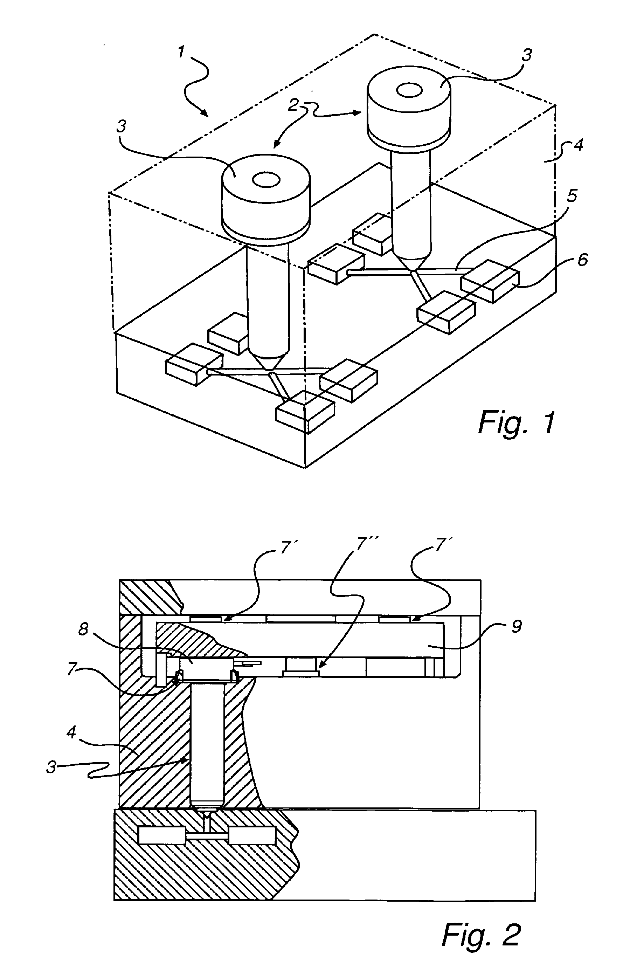

Fig 1 shows a schematic perspective view of selected parts of an injection mould 1 comprising a hot runner injection system 2 with two heat channel tools 3 and a mould 4. In the mould 4 runners 5 are provided for distribution of the flow of material from the heat channel tools 3 to cavities 6 in the mould 4. Several cavities 6 may be provided in the mould 4 for simultaneous moulding of several pieces of goods. The injection mould 1 may have a common inlet channel (not shown).

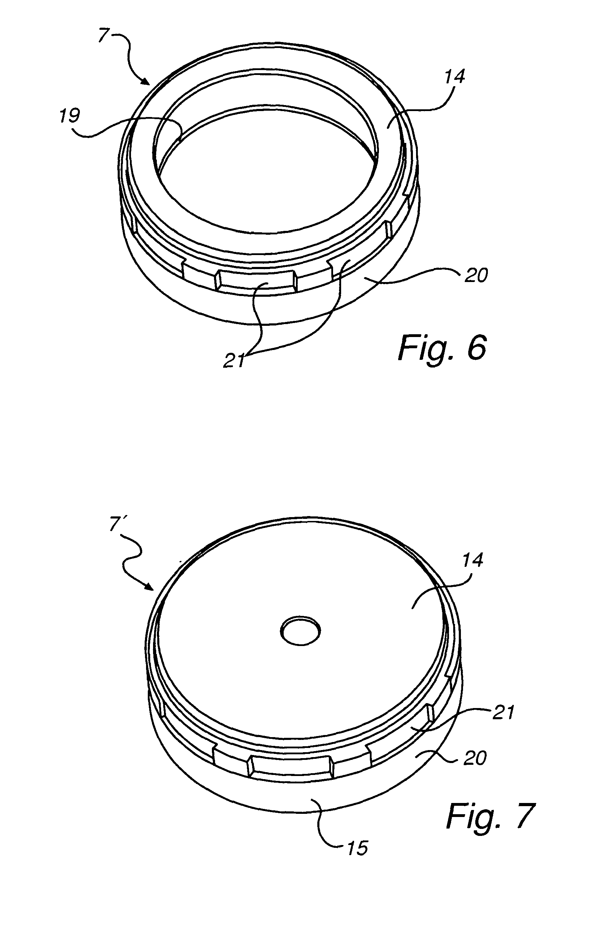

Fig 2 shows a partial sectional view of the injection mould 1 shown in fig 1. Each heat channel tool 3 of the hot runner injection system 2 is mounted into the mould 4 and is thermally insulated from it by an insulating spacer 7 according to an embodiment of the present invention. The insulating spacer 7 is arranged between a part of the mould 4 and a base part 8 of the heat channel tool 3, thereby reducing heat losses from the hot runner injection system 2 to the mould 4. The upper end surface of the insulating spacer 7 abuts against the base part 8 of the heat channel tool 3 and the lower end surface of the insulating spacer 7 abuts against a mould part 4.
Other insulating spacers 7' and 7" are arranged between a hot channel manifold 9 and a parts of the mould 4. The insulating spacers 7' form back support insulating spacers 7'. Fig 7 shows a more detailed view of such an insulating spacer 7'. The insulating spacer 7" forms a centre location insulating spacer 7". Thus, insulating spacers 7, 7', 7" may be provided at different locations in an injection mould 1.

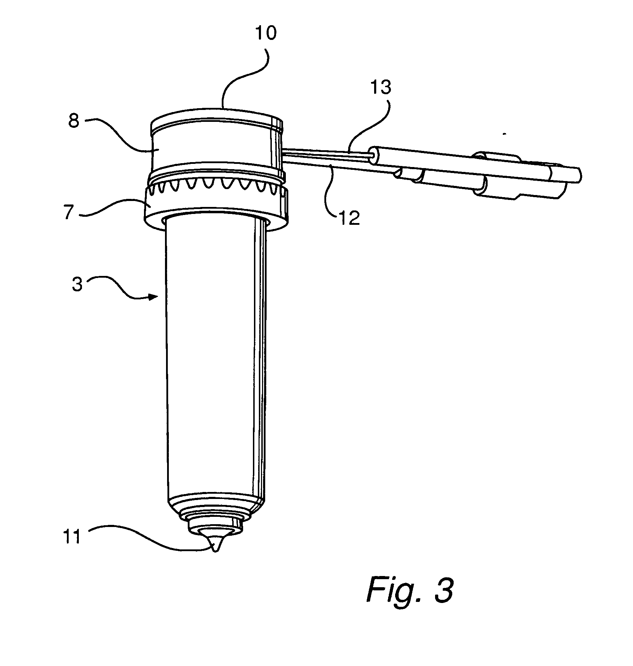

Fig 3 shows a heat channel tool 3 provided with an insulating spacer 7 according to an embodiment of the present invention. The heat channel tool 3 shown in figure 3 is a hot runner nozzle of a hot runner injection system. The heat channel tool 3 has a base part 8, which preferably is made of steel. At the top surface of the base part 8 an inlet 10 is provided, where thermoplastic material is pressed into a heat channel (not shown) inside the heat channel tool 3. The heat channel extends in the length direction of the heat channel tool 3. The heat channel tool 3 has at the bottom surface that faces a mould cavity (not shown) an outlet opening 11 through which the thermoplastic material is pressed into a mould cavity. The heat channel tool 3 is heated by an electrical element, such as a coil (not shown), which is wound around at least a part of the heat channel, where the pitch of the winding is varied in order to achieve an efficient heat distribution. Heat is supplied to the electric element through a cable 12. The temperature of the plastic material is monitored and controlled by means of a thermocouple 13.

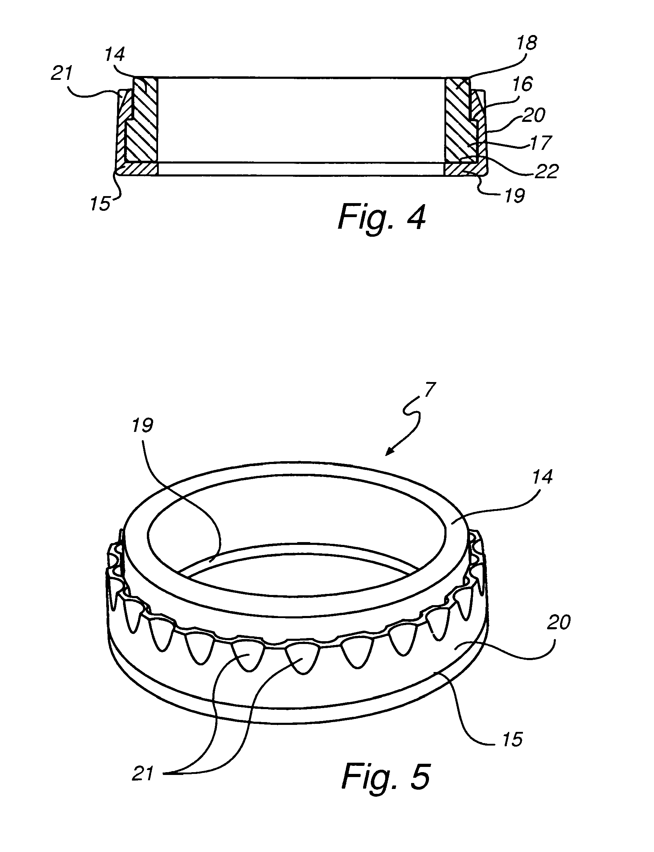

Fig 4 shows the insulating spacer 7 shown in fig 3 in a sectional view and fig 5 is a perspective view of the insulating spacer 7 shown in fig 3. The insulating spacer 7 comprises an insulating element 14 formed by a ceramic sleeve, and a dimension adaption element 15, in this case formed by stainless steel. The insulating element 14 has a first portion 17 and a second portion 18, where the outer diameter of the first portion 17 is larger than the outer diameter of the second portion 18. The insulating element 14 has a shoulder 16 formed by the first portion and the second portion. The dimension adaption element 15 has a spacer portion 19 and a receiving portion 20. The spacer portion 19 bears against a radial surface of the first portion 17 of the insulating element 14 and the receiving portion 20 is arranged at the circumference to the first and second portion of the insulating element 14. Thus, the insulating element and the dimension adaption element are complementary to each other. The insulating element 14 and the dimension adaption element 15 are engaged to each other, i.e the insulating spacer 7 is formed as a single piece. In this case this is realized by indentations 21 formed in the receiving portion 20. Portions of the receiving portion 20 have been pressed against the second portion 18 of the insulating element 14 to form the indentations 21. The indentations provides for a mechanical engagement between the insulating element and the dimension adaption element. The indentations 21 of the receiving portion 20 mechanically engages the shoulder 16 of the insulating element 14.. The receiving portion 20 also gives an outer support to the insulating element 14. An end surface 22 of the first portion 17 of the insulating element 14 abuts against spacer part 19 of the dimension adaption element 15.

Alternatively, the insulating element and the dimension adaption element may be engaged to each other by means of press fit or by means of an adhesive, such as glue, provided between an outer surface of the insulating element 14 and an inner surface of the receiving portion 20 of the dimension adaption element 15.

With reference to fig 2, it should be noted that only the insulating element 14 of the insulating spacer 7 abuts against the base part 8 of the heat channel tool 3. Thus, the heat channel tool 3 is thermally insulated from the mould 4. During operation, the insulating spacer 7 thus forms a barrier between hot and cold parts of an injection mould 1. An advantage by insulating the hot runner injection system using an insulating spacer is that it will be easier to control the temperature of the plastic material since heat losses due to heat transfer to a present mould are reduced.

Fig 6 shows an insulating spacer according to another embodiment. This insulating spacer differs from the insulating spacer shown in e.g. fig. 5 in the configuration of the indentations 21.

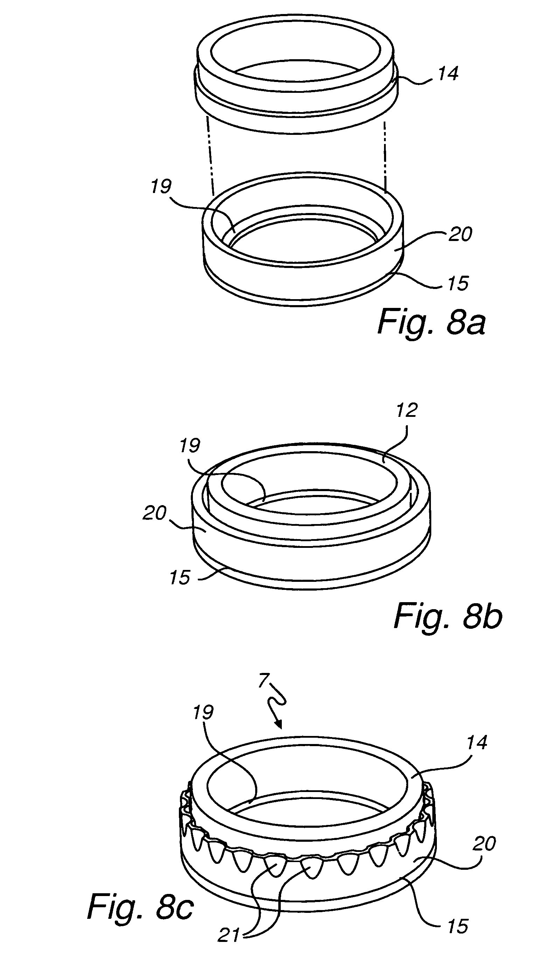

With reference to fig. 8a, 8b and 8c selected steps of a method for the assembling of an insulating element 6 according to an embodiment of the present invention will be described in the following.

Fig 8a shows an insulating element 14 and a dimension adaption element 15 spaced from each other. In a first step S1, the insulating element 14 is provided in the dimension adaption element 15. After S1, the insulating element 14 has been received in the dimension adaption element 15, see fig 8b. At this stage there may be a gap between at least a part of the outer circumference of the insulating element 14 and the receiving porting 20 of the dimension adaption element 15.

The receiving portion 20 of the dimension adaption element 15 is then pressed, i.e. using a pressing tool, from outside at certain portions along the periphery in order to form indentations that engages the insulating element 14, in step S2. Thus, after S2, the dimension adaption element 13 supports and engages the insulating element 14, see fig 8c. Thus, a robust and durable insulating spacer is provided. When assembled, the insulating spacer 7 may be mounted in a mould injection arrangement 1 to thermally insulate parts of the injection mould 1, for instance to form an insulating spacer between a base part 8 of a heat channel tool 3 and a present mould 4.

As mentioned the accuracy as regards the dimensions of an insulating spacer is crucial for the quality of a mould injection process. For instance leakage may appear if a dimension of the insulating spacer differ from a specified tolerance. In the assembling of an injection mould the dimensions of the insulating spacer are controlled in order to ensure that certain requirements are fulfilled. In case a dimension do not comply with the requirements, dimension adaption is enabled by means of machining the dimension adaption element. In an optional step S3, a dimension, such as the thickness of the insulating spacer in a longitudinal direction, is adapted to comply with the specified requirements and thus to fit a present mould. In the optional step S3, the spacer part and/or the receiving part of the dimension adaption element may be machined using methods known in the art, such as milling or facing.

In operation, hot thermoplastic material passes through a heat channel in the hot runner injection system 2 and is supplied to a mould cavity 6. By thermally insulating the hot runner injection system 2 using an insulating element, the heat transferred to surrounding goods is reduced, which makes it easier to control the temperature of the plastic material.

It will be appreciated that the described embodiment of the invention can be modified and varied by a person skilled in the art without departing from the inventive concept defined in the claims. It is realized by a person skilled in the art that features from various embodiments disclosed herein may be combined with one another in order to provide further alternative embodiments.

A person skilled in the art may for instance arrange the insulating element and the dimension adaption element in a diametrically opposed manner, i.e. the receiving portion of the dimension adaption element is arranged inside the insulating element. The receiving portion then partly extends in the length direction of the insulating element, as in the previously desrcibed embodiments, to avoid contact between the dimension adaption element and the part of the injection mould that abuts against the insulating element.

## Claims

1. An insulating spacer (7) for arrangement between at least two parts of an injection mould (1), which at least two injection mould parts will have different temperatures during operation, wherein
said insulating spacer (7) is formed by an insulating element (14) and a further element (15) comprising a material different to said insulating element, wherein the insulating element (14) and the further element (15) are adapted to be arranged such that the at least two injection mould parts having different temperatures during operation are thermally insulated from each other, wherein said insulating element and said further element are complementary engaged, **characterized in that** the further element (15) is a dimension adaptation element and
the insulating element (14) is adapted to only abut one of the two injection mould parts, and the dimension adaption element (15) is adapted to only abut the other of the two injection mould parts.

2. The insulating spacer (7) according to claim 1, wherein said dimension adaption element (15) has a receiving portion (20) arranged at the circumference of said insulating element (14).

3. The insulating spacer (7) according to any one of claims 1-2,
wherein said receiving portion (20) extends partly along the insulating element (14) in the length extension of the insulating element (14).

4. The insulating spacer (7) according to any one of claims 1-3,
wherein said insulating element (14) is lockingly engageable to said dimension adaption element (15).

5. The insulating spacer (7) according to any one of claims 1-4,
wherein said insulating element (14) has an engaging portion (16) and said dimension adaption element (15) has a locking portion which is complementary arranged to said engaging portion (16).

6. The insulating spacer (7) according to claim 5, wherein at least a portion of said dimension adaption element (15) is deformable to lockingly engage said engaging portion (16) of said insulating element (14).

7. The insulating spacer (7) according to any one of claims 1-6, wherein said insulating element (14) is a sleeve, such as a ceramic sleeve.

8. The insulating spacer (7) according to claim 7, wherein said sleeve has a first portion (17) and a second portion (18), the outer diameter of said first portion (17) being larger than the outer diameter of said second portion (18).

9. The insulating spacer (7) according to any one of claims 1-8, wherein said dimension adaption element (15) is formed by a metallic material, such as steel.

10. Injection mould (1) provided with the insulating spacer (7) according to any of claims 1-9.

## Patentansprüche

1. Isolierdistanzstück (7) zur Anordnung zwischen mindestens zwei Teilen einer Spritzgussform (1), wobei die mindestens zwei Spritzgussformteile im Betrieb unterschiedliche Temperaturen aufweisen, wobei
das Isolierdistanzstück (7) durch ein Isolierelement (14) und ein weiteres Element (15), welches ein von dem Isolierelement verschiedenes Material aufweist, gebildet wird, wobei das Isolierelement (14) und das weitere Element (15) ausgebildet sind, um derart angeordnet zu werden, dass die mindestens zwei Spritzgussformteile, die im Betrieb unterschiedliche Temperaturen aufweisen, voneinander thermisch isoliert sind, wobei das Isolierelement und das weitere Element miteinander komplementär in Eingriff stehen, **dadurch gekennzeichnet, dass** das weitere Element (15) ein Größenanpassungselement ist und
das Isolierelement (14) ausgebildet ist, um nur an einem der beiden Spritzgussformteile anzuliegen, und das Größenanpassungselement (15) ausgebildet ist, um nur an dem anderen der beiden Spritzgussformteile anzuliegen.

2. Isolierdistanzstück (7) nach Anspruch 1, wobei das Größenanpassungselement (15) einen Aufnahmeabschnitt (20) aufweist, der an dem Umfang des Isolierelements (14) angeordnet ist.

3. Isolierdistanzstück (7) nach einem beliebigen der Ansprüche 1-2, wobei sich der Aufnahmeabschnitt (20) in der Längserstreckung des Isolierelements (14) das Isolierelement (14) teilweise entlang erstreckt.

4. Isolierdistanzstück (7) nach einem beliebigen der Ansprüche 1-3, wobei das Isolierelement (14) mit dem Größenanpassungselement (15) verriegelnd in Eingriff treten kann.

5. Isolierdistanzstück (7) nach einem beliebigen der Ansprüche 1-4, wobei das Isolierelement (14) einen Eingriffabschnitt (16) aufweist und das Größenanpassungselement (15) einen Verriegelungsabschnitt, der komplementär zu dem Eingriffabschnitt (16) angeordnet ist, aufweist.

6. Isolierdistanzstück (7) nach Anspruch 5, wobei mindestens ein Abschnitt des Größenanpassungselements (15) verformbar ist, um mit dem Eingriffabschnitt (16) des Isolierelements (14) verriegelnd in Eingriff zu treten.

7. Isolierdistanzstück (7) nach einem beliebigen der Ansprüche 1-6, wobei das Isolierelement (14) eine Hülse, beispielsweise eine Keramikhülse, ist.

8. Isolierdistanzstück (7) nach Anspruch 7, wobei die Hülse einen ersten Abschnitt (17) und einen zweiten Abschnitt (18) aufweist, wobei der Außendurchmesser des ersten Abschnitts (17) größer als der Außendurchmesser des zweiten Abschnitts (18) ist.

9. Isolierdistanzstück (7) nach einem beliebigen der Ansprüche 1-8, wobei das Größenanpassungselement (15) durch ein metallisches Material, beispielsweise Stahl, gebildet ist.

10. Spritzgussform (1), die mit dem Isolierdistanzstück (7) nach einem beliebigen der Ansprüche 1-9 versehen ist.

## Revendications

1. Structure d'espacement isolante (7) destinée à être agencée entre au moins deux pièces d'un moule d'injection (1), lesquelles aux moins deux pièces de moule d'injection présenteront des températures différentes pendant le fonctionnement, sachant que
la structure d'espacement isolante (7) est formée d'un élément isolant (14) et d'un élément supplémentaire (15) comprenant un matériau différent de l'élément isolant, sachant que l'élément isolant (14) et l'élément supplémentaire (15) sont adaptés pour être agencés de telle manière que les au moins deux pièces de moule d'injection présentant des températures différentes pendant le fonctionnement soient thermiquement isolées l'une de l'autre, sachant que l'élément isolant et l'élément supplémentaire sont mis en prise de manière complémentaire, **caractérisé en ce que** l'élément supplémentaire (15) est un élément d'adaptation de dimension et que
l'élément isolant (14) est adapté pour venir buter uniquement sur l'une des deux pièces de moule d'injection, et l'élément d'adaptation de dimension (15) est adapté pour venir buter uniquement sur l'autre des deux pièces de moule d'injection.

2. Structure d'espacement isolante (7) selon la revendication 1, dans laquelle l'élément d'adaptation de dimension (15) présente une partie de réception (20) agencée sur la circonférence de l'élément isolant (14).

3. Structure d'espacement isolante (7) selon la revendication 1 ou 2, dans laquelle la partie de réception (20) s'étend partiellement le long de l'élément isolant (14) dans l'extension en longueur de l'élément isolant (14).

4. Structure d'espacement isolante (7) selon l'une quelconque des revendications 1 à 3, dans laquelle l'élément isolant (14) peut se mettre en prise de manière bloquante sur l'élément d'adaptation de dimension (15).

5. Structure d'espacement isolante (7) selon l'une quelconque des revendications 1 à 4, dans laquelle l'élément isolant (14) présente une partie de mise en prise (16) et l'élément d'adaptation de dimension (15) présente une pièce bloquante agencée de manière complémentaire sur la partie de mise en prise (16).

6. Structure d'espacement isolante (7) selon la revendication 5, dans laquelle au moins une partie de l'élément d'adaptation de dimension (15) est déformable pour mettre en prise de manière bloquante la partie de mise en prise (16) de l'élément d'isolation (14).

7. Structure d'espacement isolante (7) selon l'une quelconque des revendications 1 à 6, dans laquelle l'élément isolant (14) est un manchon, tel qu'un manchon céramique.

8. Structure d'espacement isolante (7) selon la revendication 7, dans laquelle le manchon présente une première partie (17) et une seconde partie (18), le diamètre extérieur de la première partie (17) étant plus large que le diamètre extérieur de la seconde partie (18).

9. Structure d'espacement isolante (7) selon l'une quelconque des revendications 1 à 8, dans laquelle l'élément d'adaptation de dimension (15) est formé d'un matériau métallique tel que l'acier.

10. Moule d'injection (1) doté de la structure d'espacement isolante (7) selon l'une quelconque des revendications 1 à 9.
